# EUROPÄISCHE PATENTSCHRIFT

(11) **EP 1 979 151 B1**
(45) Veröffentlichungstag und Bekanntmachung des Hinweises auf die Patenterteilung: **04.06.2014**
(21) Anmeldenummer: 06830154.8
(22) Anmeldetag: 28.11.2006
(51) Int. Cl.: B29C 45/73, B23P 15/00, B29C 45/33, B29C 33/04

(54) **VERBESSERTE HALSBACKENKÜHLUNG**
IMPROVED NECK BLOCK COOLING
REFROIDISSEMENT DE GOULOT AMÉLIORÉ

(30) Priorität: 01.02.2006 DE 102006004928
(43) Veröffentlichungstag der Anmeldung: 15.10.2008
(60) Teilanmeldung: 10163970.6
(73) Patentinhaber: MHT Mold & Hotrunner Technology AG, 65239 Hochheim am Main (DE)
(72) Erfinder: NETER, Witold, Newman, Georgia 30265 (US); HÖNISCH, Marek, 65510 Hünstetten (DE); WEGMANN, Klaus, 55218 Ingelheim (DE); SCHWEININGER, Stefan, 65197 Wiesbaden (DE); WAGNER, Christian, 55118 Mainz (DE)
(74) Vertreter: WSL Patentanwälte Partnerschaft mbB
(86) Internationale Anmeldenummer: PCT/EP2006/069004
(87) Internationale Veröffentlichungsnummer: WO 2007/087913

(56) Entgegenhaltungen:
- WO-A-2006/128275
- US-A- 4 017 242
- US-A- 5 599 567
- US-A- 5 607 702
- US-A- 5 930 882
- US-A1- 2001 051 192
- US-A1- 2005 276 879

## Beschreibung

Die vorliegende Erfindung betrifft eine Halsbacke eines Formwerkzeuges zur Herstellung eines Hohlkörperformlings mittels Spritzgießen, wobei die Halsbacke einen Grundkörper mit einer formgebenden Oberfläche aufweist, die der Außenkontur eines Halsabschnitts des herzustellenden Hohlkörperformlings angepaßt ist und dafür vorgesehen ist, beim Spritzgießvorgang mit dem Halsabschnitt des Hohlkörperformlings in Kontakt zu treten, wobei weiterhin zumindest ein Kühlkanal für ein Kühlfluid, der zumindest abschnittsweise im wesentlichen parallel zur formgebenden Oberfläche verläuft, ein Einlaß und ein Auslaß sowie ein Einlaßkanal und ein Auslaßkanal, die den Einlaß bzw. den Auslaß mit dem Kühlkanal verbinden, vorgesehen sind, wobei der Kühlkanal näher an der formgebenden Oberfläche angeordnet ist als der Einlaß und der Auslaß.

Beim Spritzgießen wird der Werkstoff plastifiziert und dann unter hohem Druck in ein Spritzgießwerkzeug eingespritzt. Der Werkstoff verbleibt im Werkzeug bis er in einen festen, entformbaren Zustand übergeht. Das Spritzgießwerkzeug bildet hierzu einen im wesentlichen geschlossenen Raum aus, dessen Kontur der vorgesehen Außenkontur des zu fertigenden Gußteils entspricht.

Bei der Herstellung von PET-Flaschen werden zunächst mittels Spritzgießen entsprechende Hohlkörperformlinge hergestellt, die erst in einem weiteren Verfahrensschritt in die endgültige Flaschenform aufgeblasen werden. Die mittels Spritzgießen hergestellten Hohlkörperformlinge für PET-Flaschen werden auch als Vorformlinge oder Preforms bezeichnet. Der im Spritzgießwerkzeug zu fertigende Vorformling weist im Bereich des späteren Flaschenhalses ein Gewinde sowie in der Regel einen Halsring auf. Sowohl das Gewinde als auch der Halsring bilden im formgebenden Werkzeug Hinterschneidungen, so daß das Spritzgießwerkzeug zumindest in diesem Bereich mehrteilig ausgestaltet sein muß, um eine Entformung des Vorformlings zu ermöglichen. Das die Außenkontur des Flaschengewindes sowie des Halsrings bildende Spritzgießwerkzeugteil ist im allgemeinen zweiteilig ausgeführt, wobei jedes der zwei Teile als Halsbacke bezeichnet wird und jeder Teil einen 180 °-Umfangsabschnitt des Gewindes darstellt.

Generell ist es beim Spritzgießen erwünscht, die entsprechenden Wandstärken der Formlinge zu verringern. Dies hat neben der Material- und Gewichtsersparnis den zusätzlichen Vorteil, daß die Zykluszeit, d.h. die Zeit, über welche sich der Formling im Formnest des Werkzeugs befindet, um in einen Zustand überzugehen, in dem der Formling ohne Deformationen aus dem Werkzeug entnehmbar ist, verringert wird. Formlinge mit geringerer Wandstärke gehen schneller in einen formstabilen Zustand über.

Die Entwicklung hin zu immer dünneren Wandstärken ist mittlerweile so weit fortgeschritten, daß bei Vorformlingen der Bereich des Gewindes und des Halsrings die größte Wandstärke aufweist und die Abkühlung dieses Bereichs des Vorformlings der die Zykluszeit bestimmende Faktor ist. Aufgrund der Gewindeausbildung bedarf es einer erhöhten Wartezeit, bis auch im Bereich des Gewindes bzw. des Halsrings der plastifizierte Werkstoff überall in einen entnehmbaren Zustand übergegangen ist.

Um die Zykluszeiten beim Spritzgießen von Vorformlingen zu verkürzen, ist es daher bereits üblich, in die Halsbacken zwei miteinander verbundene Kühlbohrungen einzubringen, durch die ein Kühlfluid, meistens Wasser, zu- bzw. abgeführt wird. Zu diesem Zweck werden die Kühlbohrungen im wesentlichen V-förmig ausgebildet. D.h. es wird zunächst eine Kühlsackbohrung in das Spritzgießwerkzeugteil eingebracht und dann eine zweite mit einer zu der ersten Bohrungsachse geneigten Bohrungsachse eingebracht, wobei sich die beiden Bohrungen im Werkzeugkörper treffen, so daß durch die eine Kühlbohrung Kühlfluid in den Werkzeugkörper eingebracht werden kann, das dann durch die erste Kühlbohrung in die zweite fließt und über die zweite Kühlbohrung den Werkzeugkörper wieder verlassen kann. Bei diesen Ausführungsformen kann das Kühlmittel jedoch nur sehr punktuell eingebracht werden. Dies führt nur zu geringen Kühlleistungen in den Halsbacken und darüber hinaus zu einer ungleichmäßigen Wärmeabfuhr. Darüber hinaus führt auch die inhomogene Abkühlung des Formlings zu Problemen bei der Formstabilität des Formlings selbst.

Vereinzelt werden daher bereits zusätzliche Bohrungen in das Werkzeugteil eingebracht, die ebenfalls in den Kühlbohrungen oder in unmittelbarer Nähe davon enden, wobei in diese zusätzlichen Bohrungen sogenannte Kühlstifte eingesetzt werden, die beispielsweise aus Silber hergestellt sind und eine gegenüber dem Material des Werkzeugs erhöhte Wärmeleitfähigkeit aufweisen, so daß die Wärme auch über die Kühtstifte zu dem Kühlkanal transportiert werden kann.

Abgesehen davon, daß das Vorsehen von Kühlstiften zu erhöhten Kosten bei der Herstellung des Spritzgießwerkzeugs führt, ist die Wärmeverteilung innerhalb des Werkzeuges auch bei diesen Ausführungsformen nicht optimal.

Die Patentschrift US 5,930,882 offenbart einen Kühlkanal für eine Halsbacke, wobei die Halsbacke zweistückig ausgeführt ist. Sie weist ein radial außenliegendes maschinenbearbeitetes Teil sowie ein radial innenliegendes, die formgebende Oberfläche bildendes Gußteil auf. Dabei sind am Außenumfang des Gußteils, d.h. an seiner der formgebenden Oberfläche abgewandten Seite Ausnehmungen als Kühlkanäle vorgesehen. Diese werden mit dem radial außenliegenden Teil der Halsbacke gegen die Umgebung abgedichtet, wobei im radial außenliegenden Teil der Halsbacke auch der Zulauf und der Ablauf für das Kühlfluid angeordnet ist. Dabei erweist es sich jedoch als nachteilig, daß das radial innen liegende Teil als Gußteil vorgesehen ist, da für die Herstellung von Halsbacken für unterschiedliche Formen von Formlingen jeweils eine Urform für das Gießen des Gußteils benötigt wird. Solche Gießformen sind jedoch teuer in der Herstellung. Darüber hinaus wirkt sich die zweiteilige Ausführung des Grundkörpers der Halsbacke nachteilig auf die Stabilität der Halsbacke aus. Brüche entlang der Verbindung zwischen dem radial innenliegenden und dem radial außenliegenden Teil sind wahrscheinlich.

Auch die US 5,599,567 beschreibt eine Halsbacke mit Kühlkanal nach dem Oberbegriff von Anspruch 1.

Ausgehend von diesem Stand der Technik ist es daher Aufgabe der Erfindung, eine Halsbacke bereitzustellen, welche einfach und daher kostengünstig herzustellen ist, und eine effektive und homogene Kühlung insbesondere in der Nähe der formgebenden Oberfläche der Halsbacke erlaubt.

Erfindungsgemäß wird diese Aufgabe durch eine Halsbacke mit den Merkmalen des Anspruchs 1 gelöst.

Auf diese Weise können Kühlkanäle gebildet werden, welche sich im wesentlichen entlang der gesamten formgebenden Oberfläche erstrecken, wobei auch komplexe Verläufe des Kühlkanals realisierbar sind.

Durch die Kombination von mindestens zwei sich einander anschließenden Abschnitten des Kühlkanals, wobei einer dieser Abschnitte vollständig aus dem Grundkörper ausgenommen ist, so daß seine Wände ausschließlich von dem Grundkörper gebildet werden und der zweite sich an diesen ersten Abschnitt anschließende Verbindungsabschnitt Wände aufweist, die teilweise durch den Grundkörper und teilweise durch ein auf den Grundkörper aufgesetztes Verschlußelement gebildet werden, ist es möglich, kontumah, d.h. im wesentlichen in der Nähe der formgebenden Oberfläche angeordnete Abschnitte des Kühlkanals herzustellen, die vollständig innerhalb des einstückig ausgebildeten Grundkörpers liegen. Dabei werden die Wände der vollständig im Grundkörper liegenden Abschnitte des Kühlkanals ausschließlich vom Grundkörper gebildet, so daß diese Abschnitte die Stabilität des Grundköpers nicht schwächen. Die an diese Abschnitte anschließenden Abschnitte, deren Wände nur teilweise durch den Grundkörper gebildet werden, ermöglichen das Einbringen der vollständig von dem Grundkörper ausgenommenen Abschnitte mit einem Werkzeug. Diese Abschnitte werden nach der Herstellung mit Hilfe des aufgesetzten Verschlusselements verschlossen.

Die Grundformen der formgebenden Oberfläche der Halsbacke sind im wesentlichen durch die Rotationssymmetrie des Flaschenhalses der herzustellenden Vorformlinge vorgegeben. Abweichungen von der reinen Zylinder- oder Kegelstumpfform ergeben sich durch das Gewinde, welches durch seine Steigung die vollständige Rotationssymmetrie bricht. Daher müssen die beiden Halsbacken eines Werkzeugs so ausgestaltet sein, daß sie die komplementären Hälften des Gewindes in ihrer Form wiedergeben.

Ein im wesentlichen paralleler Verlauf des Kühlkanals zur formgebenden Oberfläche im Sinne dieser Anmeldung ist ein solcher Verlauf, bei dem der Kühlkanal der Kontur der formgebenden Oberfläche innerhalb des Grundkörpers folgt oder dem Verlauf der formgebenden Oberfläche angenähert ist. Dabei können beispielsweise hintereinander angeordnete, gerade, zueinander nicht kollineare Abschnitte den Formverlauf der formgebenden Oberfläche approximieren und ein derart gebildeter Kühlkanal ist im wesentlichen parallel zur formgebenden Oberfläche.

Dabei ist es zweckmäßig, wenn die formgebende Oberfläche aus Abschnitten besteht, die im wesentlichen die Form des Mantels eines Teilzylinders oder die Form des Mantels eines Teilkegelstumpfes haben, wobei vorzugsweise die Achsen der teilzylinderförmigen Abschnitte und die Achsen der teilkegelstumpfförmigen Abschnitte auf einer Achse, der sogenannten Halsbackenachse liegen.

Bevorzugt ist eine Ausführungsform der Erfindung, bei welcher der Kühlkanal zumindest abschnittsweise eine Verzweigung aufweist, so daß für das Kühlfluid beim Durchströmen der Halsbacke vom Einlaß zum Auslaß zumindest zwei unterschiedliche Strömungspfade gebildet werden. Auf diese Weise läßt sich eine parallele Durchströmung verschiedener Abschnitte des Kühlkanals erreichen, wodurch eine sehr homogene Kühlwirkung erzielt wird, da viele Bereiche der Halsbacke im wesentlichen gleichzeitig mit Kühlfluid der Ausgangstemperatur, mit welcher das Fluid in den Kühlkanal einströmt, beaufschlagt werden. Darüber hinaus wird auf diese Weise die Durchflußmenge durch den Kühlkanal erhöht und eine Redundanz bei Verstopfung eines Strömungspfades erzielt.

Besonders bevorzugt ist eine Ausführungsform der Erfindung, bei welcher der Kühlkanal mehrere sich aneinander anschließende im wesentlichen gerade Abschnitte aufweist, wobei zwischen zwei Abschnitten Verbindungsstellen gebildet sind und wobei die Kanalachsen von je zwei sich aneinander anschließenden Abschnitten nicht kollinear zueinander angeordnet sind.

Auf diese Weise ist mit Hilfe einfacher Durchgangs- oder Sackbohrung ein Kühlkanal realisierbar, der eine effiziente und homogene Kühlung der gesamten formgebenden Oberfläche der Halsbacke ermöglicht. Dazu werden die Bohrungen derart unter einem Winkel zueinander in den Grundkörper eingebracht, daß je zwei aneinander anschließende Bohrungen sich überschneidende Bereiche aufweisen, welche die Verbindungsstellen zwischen den einzelnen Abschnitten bilden. Dabei haben Sackbohrungen den Vorteil, daß die zunächst geschlossenen Enden der Bohrungen durch die Überschneidung mit der benachbarten Bohrung bereits eine Fluidverbindung zu dieser bereitstellen, wobei die Fluidverbindung vollständigen von Wänden des Grundkörpers umgeben ist. Die offenen Enden bilden ebenfalls im Überschneidungsbereich Verbindungsstellen für eine Fluidverbindung zwischen den benachbarten Abschnitten. Die offenen Enden der Sackbohrung müssen jedoch, um einen Fluidstrom von einem zum nächsten Abschnitt zu ermöglichen, mit Hilfe eines Verschlusselements geschlossen werden.

Dabei ist es zweckmäßig, wenn die Kanalachsen von je zwei sich aneinander anschließenden Abschnitten einen Winkel zwischen 15° und 155°, vorzugsweise zwischen 30° und 100° und besonders bevorzugt zwischen 40° und 70° einschließen.

Vorteilhaft ist es darüber hinaus, wenn zumindest ein Teil der Abschnitte des Kühlkanals gegenüber der Halsbackenachse geneigt angeordnet sind. Auf diese Weise kann der Kontur der formgebenden Oberfläche auch in der axialen Richtung der Halsbacke gefolgt werden. Darüber hinaus läßt sich durch den gegenüber der Halsbackenachse geneigten Verlauf eine weitere Annäherung des Kühlkanals an die formgebende Oberfläche und damit eine effizientere Kühlung erreichen.

Bevorzugt ist eine Ausführungsform der Erfindung, bei welcher jede zweite Verbindungsstelle zwischen zwei sich aneinander anschließenden Abschnitten einen Verbindungsabschnitt des Kühlkanals bildet, dessen Kanalwand zumindest teilweise von dem Verschlußelement gebildet wird.

Besonders bevorzugt ist eine Ausführungsform der Erfindung, bei welcher der Kühlkanal eine Mehrzahl von sich aneinander anschließenden Abschnitten aufweist, wobei jeder zweite der Mehrzahl von sich aneinander anschließenden Abschnitten ein Horizontalabschnitt ist, der im wesentlichen senkrecht zu der Halsbackenachse angeordnet ist, und immer ein Horizontalabschnitt über einen Vertikalabschnitt, der mit einem Winkel von weniger als 60°, vorzugsweise zwischen 30° und 45° und besonders bevorzugt zwischen 35° und 40° gegenüber der Halsbakkenachse geneigt ist, mit einem weiteren Horizontalabschnitt verbunden ist.

Dabei ist es zweckmäßig, wenn die Kanalwände zumindest jedes vierten, vorzugsweise jedes zweiten der Mehrzahl von sich aneinander anschließenden Abschnitten teilweise von dem Verschlußelement gebildet werden. Auf diese Weise kann ein Kühlkanal ausgebildet werden, bei welchem die Kühlleistung des Fluids in axialer Richtung effizient über den Grundkörper der Halsbacke bzw. die formgebende Oberfläche verteilt wird.

Vorteilhaft ist eine Ausführungsform der Erfindung, bei welcher der Kühlkanal zumindest abschnittsweise alternierend Horizontalabschnitte und Vertikalabschnitte aufweist, die derart angeordnet sind, daß das Fluid vom Kühlkanal zumindest abschnittsweise mäanderförmig geführt ist.

Besonders bevorzugt ist eine Ausführungsform der Erfindung, bei welcher der Kühlkanal genau zwei Horizontalabschnitte und mindestens zwei, vorzugsweise mindestens vier, die Horizontalabschnitte verbindende Vertikalabschnitte, die derart angeordnet sind, daß das durch den Einlaß in die Halsbacke eintretende Fluid zu dem ersten der Horizontalabschnitte, von diesem über die zumindest zwei Vertikalabschnitte zu dem zweiten Horizontalbschnitt und weiter zum Auslasskanal und zum Auslaß geleitet wird. Ein derart ausgestalteter Kühlkanal ermöglicht die parallele Durchströmung des Grundkörpers über den gesamten Umfangsbereich der formgebenden Oberfläche in nahezu der gesamten axialen Ausdehnung der formgebenden Oberfläche.

Bei den zuvor genannten Ausführungsformen ist es zweckmäßig, wenn die Vertikalabschnitte in Form von Bohrungen in den Grundkörper der Halsbacke eingebracht sind während die Horizontalabschnitte als Einfräsungen auf der Ober- bzw. Unterseite des Grundkörpers vorgesehen sind, so daß sie die einzelnen Vertikalabschnitte in der vorgeschlagenen Art und Weise miteinander verbinden. Um eine Führung des Fluids in den eingefrästen Ausnehmungen an der Ober- bzw. Unterseite des Grundkörpers zu ermöglichen, werden die Horizontalabschnitte des Kühlkanals mit Hilfe eines oder mehrerer Verschlußelemente abgedeckt.

In einer weiteren besonders bevorzugten Ausführungsform der Erfindung weist der Grundkörper eine der formgebenden Oberfläche abgewandte Fläche, die konisch ausgebildet ist, auf, wobei die konische Fläche dafür vorgesehen ist, mit einem anderen Bauteil des Spritzgießwerkzeuges während des Spritzgießvorgangs in Kontakt zu treten.

Eine solche konische Fläche auf der der formgebenden Oberfläche abgewandten Seite des Grundkörpers ermöglicht es, die von der Schließeinheit in Richtung der Halsbackenachse ausgeübten Kräfte in radialer Richtung umzuleiten, um die gegenüberliegenden komplementären Halsbackenelemente einer Spritzgießform während des Spritzgießvorgangs zusammenzudrükken und die Werkzeugform abzudichten.

Die Halsbacke hat somit einen im wesentlichen T-förmigen Querschnitt, wobei die formgebende Fläche den Querbalken der T-Form begrenzt und der Fuß der T-Form von einem sich von der formgebenden Fläche erstreckenden Befestigungsabschnitt gebildet wird. Mit anderen Worten hat die Halsbacke einen Abschnitt mit größerer axialer Ausdehnung, der von den konischen Flächen und der formgebenden Fläche gebildet wird und einen sich in etwa mittig daran anschließenden Befestigungsabschnitt mit geringerer axialen Ausdehnung.

Zur Erzielung einer effizienten und homogenen Kühlleistung ist es besonders zweckmäßig, wenn der Kühlkanal im wesentlichen in dem Abschnitt mit größerer axialer Ausdehnung angeordnet ist. Der Bereich mit größerer axialer Ausdehnung wird durch die ihn begrenzende formgebende Oberfläche am stärksten erwärmt. Daher ist es zweckmäßig in diesem Bereich, vorzugsweise möglichst nahe an der formgebenden Fläche, eine entsprechende Kühlleistung bereitzustellen.

Darüber hinaus ermöglicht die Anordnung des Kühlkanals in dem Bereich zwischen der formgebenden Oberfläche und der konischen Fläche eine Kühlung der Halsbacke über die gesamte axiale Erstreckung der formgebenden Oberfläche hinweg. Auf diese Weise kann der Flaschenhals des Vorformlings gleichmäßig gekühlt werden, so daß Inhomogenitäten im Material des Vorformlings vermieden werden.

Dabei ist es vorteilhaft, wenn die konische Fläche von einem separaten Konusteil gebildet wird, das als Verschlußelement ausgebildet ist. Auf diese Weise lassen sich auch im Bereich zwischen der formgebenden Oberfläche und der konischen Fläche ein Kühlkanal mit Abschnitten einbringen, deren Wände ausschließlich von dem Grundkörper gebildet werden. Die an diese Abschnitte des Kühlkanals angrenzenden Abschnitte, welche zur Fertigung zunächst offene Bereiche aufweisen, können dann mit Hilfe des als Verschlußelement ausgebildeten Konusteils verschlossen werden, so daß ein geschlossener Kühlkanal zur Verfügung gestellt wird.

Auch wenn es vorteilhaft ist, Ausnehmungen bei der Bildung des Kühlkanals ausschließlich am Grundkörper der Halsbacke vorzusehen, gibt es Ausführungsformen, bei denen es notwendig oder zweckmäßig ist, wenn das Verschlußelement Nuten oder Ausnehmungen zur Führung des Fluids aufweist.

In einer besonders bevorzugten Ausführungsform weist der Kühlkanal einen gekrümmten Abschnitt auf, dessen Wände von dem Grundkörper der Halsbacke und nur an einem oder beiden Enden zumindest teilweise von dem Verschlußelement gebildet werden. Solche gekrümmten Kühlkanäle können insbesondere dann, wenn sie eine im wesentlichen zur Halsbackenachse senkrechte Ausrichtung aufweisen, einen äquidistanten Abstand zur formgebenden-Oberfläche einhalten, so daß in Umfangsrichtung eine über die formgebende Oberfläche weitgehend homogene Kühlleistung erzielt wird.

Solche gekrümmten Abschnitte des Kühlkanals, deren Wände von dem Grundkörper der Halsbacke gebildet werden und nur an einem oder beiden Enden zumindest teilweise von dem Verschlußelement, lassen sich vorzugsweise mit Hilfe eines Funkenerosionsverfahrens herstellen. Dabei wird eine Erosionselektrode, die um eine im wesentlichen mit der Halsbackenachse zusammenfallende Achse drehbar gelagert ist und so an einem Werkzeughalter montiert ist, daß sie in den Kühlkanal eingeführt werden kann, verwendet, um den gekrümmten Kühlkanal zu fertigen.

Ein solcher Kühlkanal weist nach der Herstellung nur ein offenes Ende auf, durch welches die Erosionselektrode in den Kühlkanal eingeführt wurde. Dieses Ende wird mit Hilfe des erfindungsgemäßen Verschlußelementes verschlossen. Werden die Enden darüber hinaus mit dem Einlaß- bzw. dem Auslaßkanal verbunden, so entsteht ein geschlossener Kühlkanal, welcher der Kontur der formgebenden Oberfläche in idealer Weise folgt.

Es ist zweckmäßig, wenn der Kühlkanal genau zwei in Richtung der Halsbackenachse voneinander beabstandete, gekrümmte Abschnitte aufweist, die an mindestens einem Ende durch einen Verbindungsabschnitt miteinander verbunden sind. Dabei werden die Wände des Verbindungsabschnitts zumindest teilweise von dem Verschlußelement gebildet. Auf diese Weise wird in Richtung der Halsbackenachse eine bessere Verteilung der Kühlleistung erreicht.

Liegen beispielsweise die zunächst offenen Enden der Kühlkanäle übereinander, sol kann durch Ausbilden einer im wesentlichen zur Halsbackenachse parallelen Nut ein Verbindungsabschnitt zwischen den beiden in Richtung der Halsbackenachse beabstandeten gekrümmten Abschnittten geschaffen werden, welcher abschließend mit Hilfe des Verschlusselements abgeschlossen wird. Werden nun die beiden von dem Grundkörper der Halsbacke abgeschlossenen Enden der gekrümmten Abschnitte des Kühlkanals mit dem Einlaß- bzw. Auslaßkanal verbunden, so ergibt sich ein geschlossener Kanal von dem Einlaß über dem Einlaßkanal zu dem ersten gekrümmten Abschnitt des Kühlkanals und von dort über den im wesentlichen vertikalen Verbindungsabschnitt zu dem zweiten gekrümmten Abschnitt und durch diesen zum Auslaßkanal und zum Auslaß.

Alternativ können an beiden Enden der gekrümmten Abschnitte des Kühlkanals mit einem Verschlußelement versehene Verbindungsabschnitte vorgesehen sein, wobei der Einlaß- bzw. Auslaßkanal zwischen den beiden Enden der gekrümmten Abschnitte des Kühlkanals mit diesen verbunden sind, so daß sich der einströmende Fluidstrom in zwei Zweige aufteilt. Die zu der Halsbackenachse im wesentlichen parallelen Verbindungsabschnitte werden in der gleichen Strömungsrichtung durchlaufen.

Durch das Erodieren der Kanäle ist es darüber hinaus möglich einen Kühlkanal mit beliebigem, nicht kreisförmigen Querschnitt herzustellen. Dies gilt insbesondere für diejenigen Abschnitte des Kühlkanals deren Wände vollständig vom Grundkörper der Halsbacke gebildet werden. Demgegenüber weisen die gebohrten Kühlkanäle aus dem Stand der Technik immer einen kreisförmigen Querschnitt auf. So weisen bevorzugte Ausführungsformen der erfindungsgemäßen Halsbacke einen Kühlkanal mit quadratischem, rechteckigem, dreieckigen und sichelförmigen Querschnitt auf. Insbesondere ist es dabei zweckmäßig, wenn der Querschnitt des Kühlkanals der formgebenden Oberfläche derart angepaßt ist, daß der Kühlkanal einen möglichst großen Oberflächenbereich aufweist, der im wesentlichen parallel zur formgebenden Oberfläche verläuft.

Auch ist es möglich den gekrümmten Abschnitt des Kühlkanals von zwei Enden her zu erodieren.

In einer alternativen Ausführungsform weist der gekrümmte Abschnitt des Kühlkanals zwei oder mehr Sektionen auf, die sich über einen Winkelabschnitt von 90° oder weniger erstrecken, wocken, wobei die einzelnen Sektionen untereinander durch weitere im wesentlichen gerade Abschnitte miteinander verbunden sind.

Vorteilhaft ist es darüber hinaus, wenn der Kühlkanal einen minimalen Abstand von weniger als 10 mm, vorzugsweise von weniger als 5 mm und besonders bevorzugt von weniger als 3 mm von der formgebenden Oberfläche aufweist.

Die der Erfindung zugrunde liegende Aufgabe wird auch durch eine Spritzgießform zur Herstellung von Hohlkörperformlingen mit mindestens einer Halsbacke mit den zuvor genannten Merkmalen gelöst.

Weitere Vorteile, Merkmale und Anwendungsmöglichkeiten der vorliegenden Erfindung werden anhand der folgenden Beschreibung bevorzugter Ausführungsformen sowie der dazugehörigen Figuren deutlich. Es zeigen:
- Figur 1: eine perspektivische Ansicht einer Ausführungsform einer Halsbacke gemäß dem Stand der Technik,
- Figur 2: eine Seitenansicht der Halsbacke aus Figur 1,
- Figur 3: eine zweite Ausführungsform einer Halsbacke gemäß dem Stand der Technik,
- Figur 4: eine Seitenansicht der Halsbacke aus Figur 3,
- Figur 5: eine schematische Darstellung einer ersten erfindungsgemäßen Ausführungsform einer Halsbacke mit Kühlkanal,
- Figur 6: eine seitliche Schnittansicht der erfindungsgemäße Halsbacken aus Figur 5,
- Figur 7: eine schematische Darstellung einer zweiten Ausführungsform einer nicht erfindungsgemäßen Halsbacke,
- Figur 8: eine seitliche Schnittansicht der Halsbacke aus Figur 7,
- Figur 9: eine Aufsicht von unten der Halsbacke aus Figuren 7 und 8,
- Figur 10: eine schematische Darstellung einer Ausführungsform der erfindungsgemäßen Halsbacke,
- Figur 11: eine schematische Darstellung einer weiteren Ausführungsform der erfindungsgemäßen Halsbacke,
- Figur 12: eine seitliche Schnittansicht der Halsbacke aus Figur 11,
- Figur 13: eine schematische Darstellung einer alternativen Ausführungsform der erfindungsgemäßen Halsbacke,
- Figur 14: eine seitliche Schnittansicht durch eine alternative Ausführungsform der Halsbacke,
- Figur 15: eine schematische Darstellung einer Ausführungsform der erfindungsgemäßen Halsbacke,
- Figur 16: eine seitliche Schnittansicht durch die Halsbacke aus Figur 15,
- Figur 17: eine schematische Darstellung einer weiteren Ausführungsform einer nicht erfindungsgemäßen Halsbacke,
- Figur 18: eine schematische Darstellung einer alternativen Ausführungsform einer nicht erfindungsgemäßen Halsbacke,
- Figur 19: eine seitliche Schnittansicht durch die Halsbacke aus Figur 18,
- Figur 20: eine Ansicht von unten auf die erfindungsgemäße Halsbacke aus Figuren 18 und 19,
- Figur 21: eine schematische Ansicht eines Werkzeugs zur Herstellung der Halsbacke aus Figuren 18 bis 20.

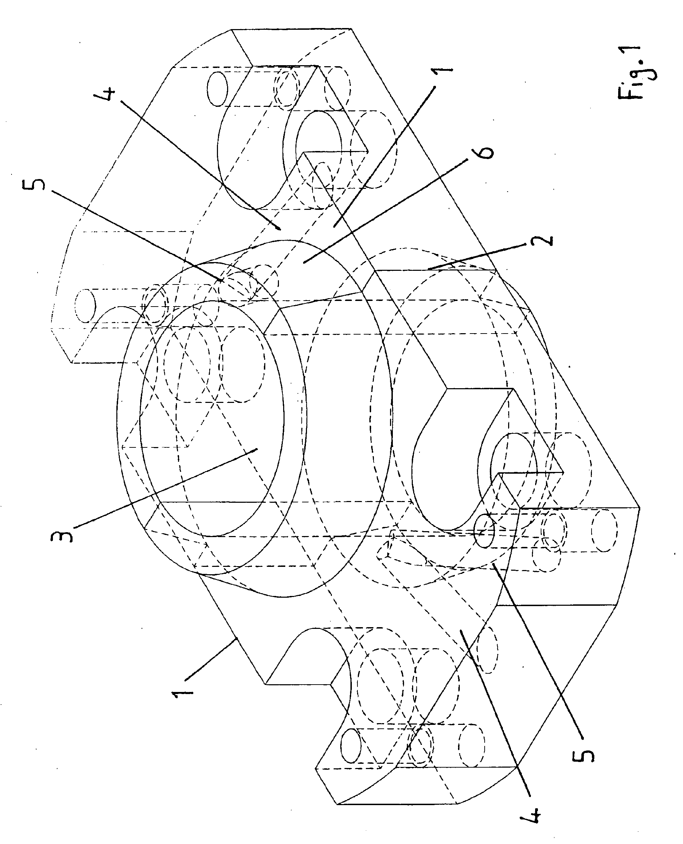

Figur 1 zeigt eine Halsbacke gemäß einer Ausführungsform des Standes der Technik. Die in Figur 1 gestrichelt gezeichneten Linien liegen innerhalb des Werkzeuges und können bei einer normalen Draufsicht auf das Werkzeug nicht gesehen werden. Sie dienen hier der Verdeutlichung des inneren Verlaufs der einzelnen Kanäle.

Das dargestellte Werkzeug weist zwei Halsbacken auf, wobei jede einen Grund- bzw. Werkzeugkörper 1 aufweist. Die in Figur 1 gezeigten Halsbacken können an der Trennfläche 2 auseinandergezogen werden. Das Werkzeug hat eine im wesentlichen zylindrische Innenkontur, die einen Formraum 3 umgibt. Die Halsbacken sind Teil eines Spritzgießwerkzeuges. Im Spritzgießverfahren wird in das vollständig geschlossene Spritzgießwerkzeugteil der plastifizierte Kunststoff eingespritzt, der sich an die entsprechenden Konturen des Werkzeuges anlegt und sich verfestigt. Nach der Verfestigung kann das Spritzgießwerkzeug geöffnet werden und der Formling dem Werkzeug entnommen werden. Die Halsbacken weisen an ihrer Ober- und Unterseite jeweils einen Konus 6 auf, der mit anderen Spritzgießwerkzeugteilen zusammenwirkt, die hier jedoch nicht gezeigt sind.

Wie bereits ausgeführt wurde, muß der Formling, bzw. im Fall der gezeigten Halsbacke der Vorformling, solange im Werkzeug verbleiben, bis das thermoplastische Material festgeworden ist. Dies erfolgt umso schneller, je effektiver das Spritzgießwerkzeugteil gekühlt wird. Grundsätzlich ist ein schnelles Erstarren des Vorformlings wünschenswert, da dann die Zykluszeit verkürzt werden kann und das Werkzeug schneller für die Herstellung eines weiteren Vorformlings zur Verfügung steht.

Zur schnelleren Kühlung insbesondere in der Nähe der Innenkontur, die den Hohlraum 3 bildet, ist es bereits üblich, zwei Kühlbohrungen 4 und 5 in den Werkzeugkörper 1 einzubringen. Zur Kühlung wird das Kühlfluid, zumeist Kühlwasser, durch die eine Kühlbohrung 4 eingebracht und läuft dann aufgrund der Verbindung der beiden Bohrungen über die andere Kühlbohrung 5 wieder aus dem Werkzeug heraus.

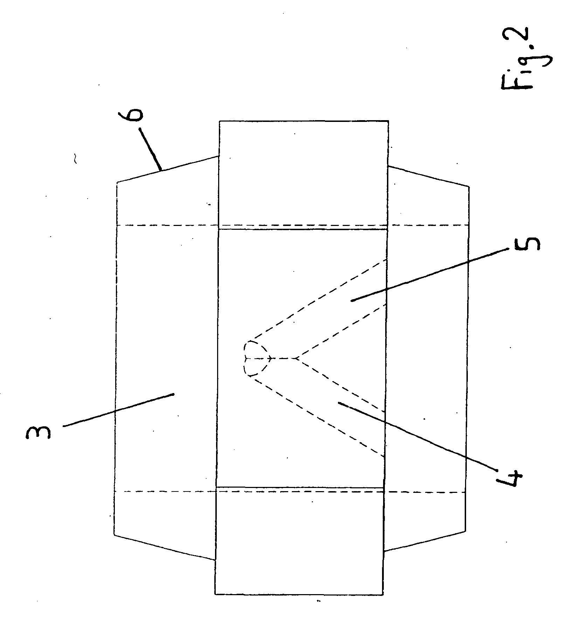

Figur 2 zeigt eine Seitenansicht der Ausführungsform von Figur 1, wobei erneut die inneren Bohrungen bzw. Kanäle gestrichelt dargestellt sind. Zu erkennen ist auch hier der konusförmige Anschluß 6 sowie die innere Öffnung 3, in welcher der Vorformling angeordnet ist. Die Kühlbohrungen 4 und 5 sind V-förmig angeordnet. Hierzu werden lediglich zwei Sackbohrungen in das Werkzeugteil eingebracht, so daß der Bohrgrund in der entsprechenden anderen Bohrung endet. Die beiden Kühlbohrungen sind somit innerhalb des Werkzeugkörpers 1 miteinander verbunden. Man erkennt deutlich, daß die Kühlung im wesentlichen nur punktförmig erfolgt, d.h. an dem Punkt, an dem sich die beiden Kühlbohrungen 4, 5 treffen.

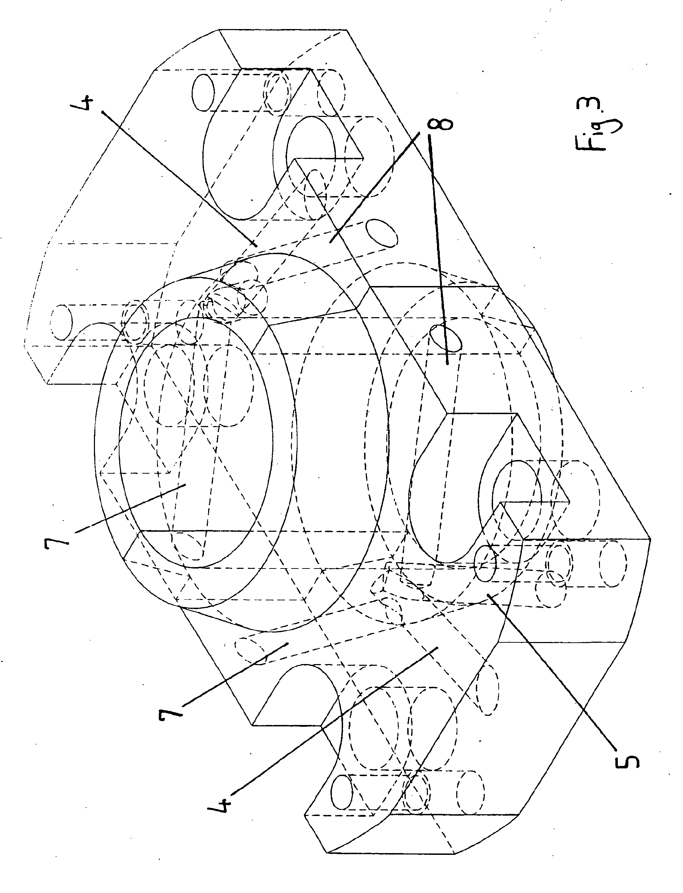

In Figur 3 ist eine weitere Ausführungsform des Standes der Technik gezeigt. Diese entspricht im wesentlichen der Ausführungsform von Figur 1, wobei hier zusätzlich Bohrungen 7 und 8 eingebracht worden sind, die in der Nähe oder sogar innerhalb der beiden Kühlbohrungen 4 und 5 enden. Die zusätzlichen Bohrungen 7, 8 sind für die Aufnahme sogenannter Kühlstifte vorgesehen. Diese Kühlstifte werden in die Bohrungen 7, 8 eingeführt und verschließen diese vollständig. Die Kühlstifte sind aus einem Material hergestellt, dessen Wärmeleitfähigkeit sehr viel größer ist als die Wärmeleitfähigkeit des Materials, aus dem der Werkzeugkörper 1 des Spritzgußwerkzeugteils hergestellt ist. Beispielsweise sind die Kühlstifte aus reinem Silber hergestellt. Durch die Kühlstifte mit erhöhter Wärmeleitfähigkeit wird im Bereich der mit der heißen plastifizierten Masse beaufschlagten Innenkontur eine verbesserte Kühlung erzielt.

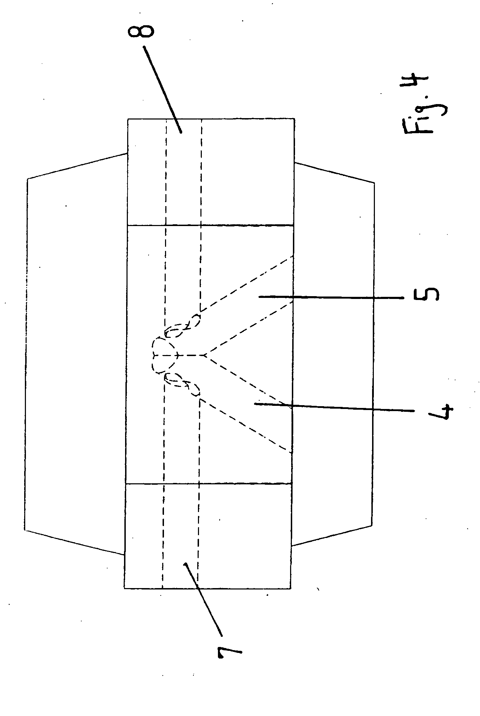

In Figur 4 ist eine Seitenansicht der Ausführungsform gezeigt. Deutlich zu erkennen ist, daß durch die Kühlbohrungen 4, 5 erneut ein V-förmiger Kühlkanal gebildet wird. Der Kühlkanal stellt somit eine punktförmige Kühlung zur Verfügung, die in diesem Fall mit Hilfe der Kühlstifte mit erhöhter Wärmeleitfähigkeit etwas gleichmäßiger verteilt wird.

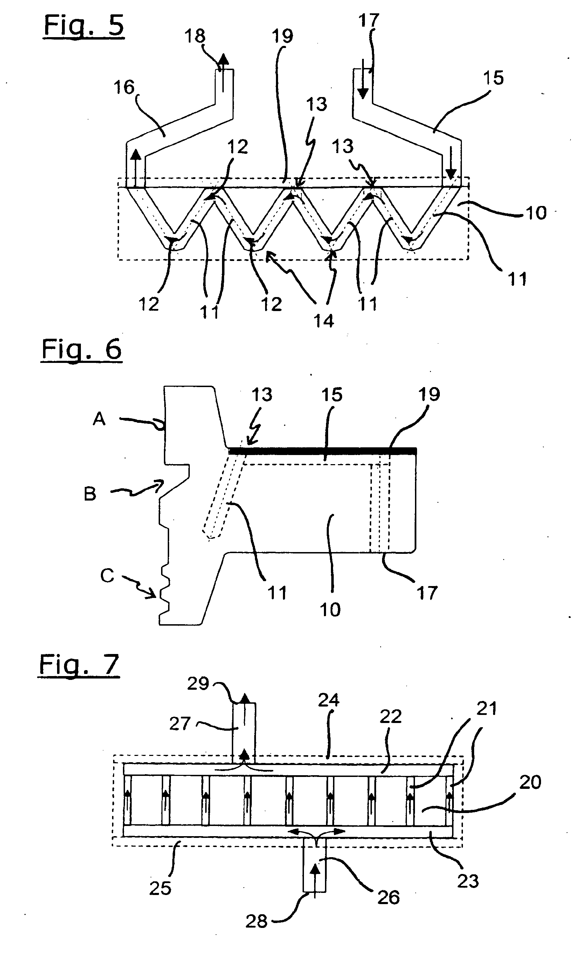

In Figur 5 ist eine schematische Schnittansicht durch eine erste erfindungsgemäße Ausführungsform der Halsbacke dargestellt. In dem Grund- bzw. Werkzeugkörper 10 der Halsbacke, der in der dargestellten Ausführungsform aus Werkzeugstahl hergestellt ist, sind acht Sackbohrungen 11 eingebracht, welche zusammen den Kühlkanal bilden. Die Sackbohrungen 11 sind derart angeordnet, daß jeweils zwei benachbarte Bohrungen einen Winkel einschließen, so daß sie sich an ihrem oberen oder unteren Ende überschneiden, wobei ein zusammenhängender Kanal gebildet wird. Dabei bilden die Überschneidungsbereiche der einzelnen Sackbohrungen Verbindungsstellen 12 zwischen den einzelnen Bohrungen des Kanals. Der durch die Sackbohrungen 11 gebildete Kühlkanal läßt sich in Abschnitte 13, 14 unterteilen, wobei die Abschnitte 14 derart ausgestaltet sind, daß sie in dem Grundkörper 10 verlaufen und ihre Wände von dem Grundkörper gebildet werden. Die an die Abschnitte 14 anschließenden Verbindungsabschnitte 13 hingegen weisen zumindest einen Wandabschnitt auf, welcher durch ein auf den Grundkörper 10 aufgesetztes Verschlußelement, in der dargestellten Ausführungsform eine Verschlußplatte 19, gebildet wird. Die beiden außenliegenden Sackbohrungen 11 sind über den Einlaßkanal 15 bzw. den Auslaßkanal 16 mit dem Einlaß 17 bzw. dem Auslaß 18 verbunden, so daß sich ein geschlossener Kühlkanal von dem Einlaß 17 bis zu dem Auslaß 18 ergibt. Dabei ist die Darstellung in Figur 5 in Bezug auf den Verlauf des Einlaß- 15 bzw. Auslaßkanals 16 nur schematisch.

In Figur 6 ist eine seitliche Schnittansicht durch eine Halsbacke mit einem Kühlkanal, sowie er in Figur 5 dargestellt ist, gezeigt. Deutlich ist der Verlauf einer Sackbohrung 11 innerhalb des Grundkörpers 10 zu erkennen. Der Kühlkanal, d.h. und daher die Bohrungen 11, ist gegenüber der Halsbackenachse geneigt, um einen möglichst engen Abstand zwischen Kühlkanal und der formgebenden Oberfläche A der Halsbacke zu ermöglichen. Auch ist die Abdeckung des Verbindungsabschnitts 13 des Kühlkanals mit Hilfe der Verschlußplatte 19 deutlich zu erkennen. In der dargestellten erfindungsgemäßen Ausführungsform dient die Verschlußplatte 19 sowohl als Wand für den Verbindungsabschnitt 13 als auch für die Einlaß- 15 und Auslasskanäle 16.

In Figur 6 ist auch deutlich der Aufbau der Form zu erkennen. Die formgebende Oberfläche A weist eine Ausnehmung B auf, welche den Halsring der Flasche bildet und Ausnehmungen C zur Formung des Gewindes.

In einer alternativen, hier nicht dargestellten Ausführungsform können die Sackbohrungen 11 durch Durchgangsbohrungen ersetzt werden, so daß auch an der Unterseite des Grundkörpers 10 der Kühlkanal Verbindungsabschnitte aufweist, die mit Hilfe einer Verschlußplatte verschlossen werden müssen.

In Figur 7 ist eine nicht erfindungsgemäße Ausführungsform des Kühlkanals dargestellt. Dabei weist auch dieser Kühlkanal Abschnitte 21 auf, deren Wände vollständig von dem Grundkörper 20 der Halsbacke gebildet werden, während Verbindungsabschnitte 22, 23 vorgesehen sind, welche auch von Verschlussplatten 24, 25 begrenzt werden. Der Kühlkanal aus Figur 7 ist derart ausgestaltet, daß zwei Horizontalbschnitte 22, 23 aufweist, die senkrecht zu der Halsbackenachse angeordnet sind und die in axialer Richtung voneinander beabstandet sind. Dabei werden diese horizontalen Abschnitte 22, 23 von Einfräsungen in den Grundkörper 20 der Halsbacke gebildet und mit Hilfe der Verschlußplatten 24, 25, welche auf den Grundkörper 20 aufgelötet sind, verschlossen. Die Horizontalabschnitte 22, 23 sind durch insgesamt neun Vertikalabschnitte 21 miteinander verbunden. Der Einlaßkanal 26 verbindet den Einlaß 28 mit dem unteren Horizontalabschnitt des Kühlkanals, während der Auslaßkanal 27 den oberen Horizontalabschnitt 22 mit dem Auslaß 29 verbindet. Auf diese Weise wird ein in den Kühlkanal einströmendes Fluid die Vertikalabschnitte 21 im wesentlichen gleichzeitig und in gleicher Fließrichtung durchfließen.

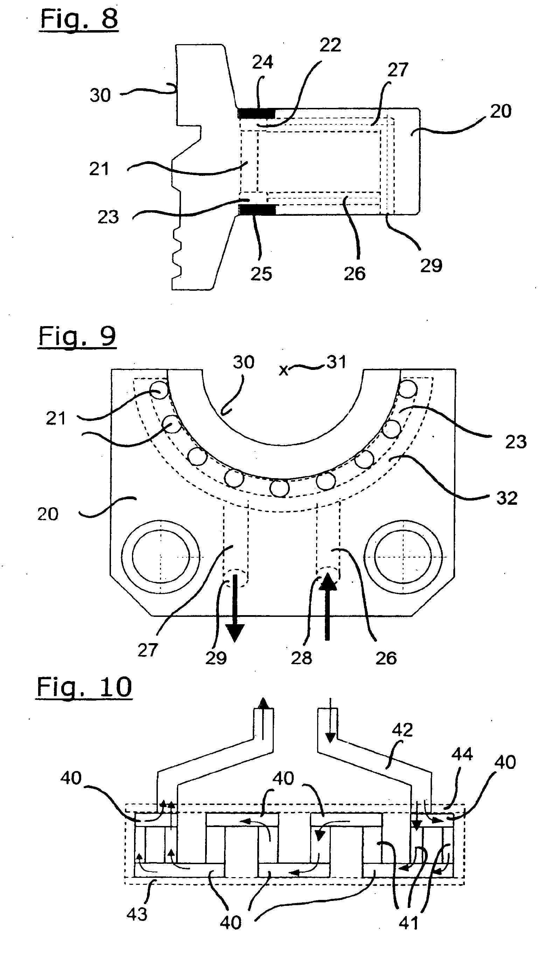

Figur 8 zeigt eine seitliche Schnittansicht durch die Halsbacke mit einem Kühlkanal, sowie sie schematisch in Figur 7 dargestellt ist. Dabei ist insbesondere die Anordnung der Vertikal-21 und Horizontalabschnitte 22, 23 verdeutlicht.

Die Verschlußplatten 24, 25 sind in Ausnehmungen in dem Grundkörper 20 der Halsbacke eingesetzt. Dabei ist es entscheidend, daß die Verschlußplatten 24, 25 bündig mit der Oberfläche des Grundkörpers abschließen und derart mit dem Grundkörper 20 verbunden sind, daß kein Lot über die Flucht des Grundkörpers 20 übersteht. Dazu sind die Aussparungen 32, in denen die Verschlussplatten 24, 25 aufgenommen sind, derart dimensioniert, daß sie das gesamte Lot auch nach dem Lötvorgang aufnehmen können.

In der dargestellten Ausführungsform ist das Lot ein Sprühlot, welches eine geringfügig höhere Fließtemperatur aufweist als die typische Härtetemperatur für den Grundkörper verwendeten Werkzeugstahl. Auf diese Weise können der Lötprozeß sowie der Härteprozeß für das Werkzeug miteinander verbunden werden, in dem beim Härten des Werkzeugs dieses zunächst auf die Fließtemperatur des Lots erwärmt wird, so daß sich die Verschlussplatten 24, 25 mit dem Grundkörper 20 verbinden, bevor das Werkzeug abgekühlt wird, um es bei der vorgesehen Härtetemperatur zu härten.

In Figur 9 ist eine Ansicht von unten auf die Halsbacke aus Figuren 7 und 8 dargestellt. Deutlich sind die halbkreisförmig um die formgebende Oberfläche 30 der Halsbacke herum angeordneten Bohrungen zu erkennen, welche die zu der Halsbackenachse 30 parallelen Vertikalabschnitte 21 bilden. Die Vertikalabschnitte 21 sind mit einem aus dem Grundkörper ausgenommen Horizontalabschnitt 23 verbunden, wobei der Horizontalabschnitt 23 in Figur 9 ohne die Verschlußplatte 25 dargestellt ist, so daß die Ausnehmung 32 zur Aufnahme der Verschlußplatte 25 in Figur 9 deutlich zu erkennen ist.

In Figur 10 ist eine alternative Ausführungsform der erfindungsgemäßen Halsbacke in einer schematischen Schnittansicht dargestellt. Im Gegensatz zu der Ausführungsform gemäß den Figuren 7, 8 und 9 weist der Kühlkanal in Figur 10 nicht nur zwei sondern insgesamt sieben Horizontalabschnitte 40 auf, welche durch Vertikalabschnitte 41 verbunden sind. Dabei sind die Vertikalabschnitte 41 zwischen den Horizontalabschnitten 40 derart angeordnet, daß das durch den Einlaßkanal 42 in den Kühlkanal einströmende Fluid von den sich aneinander anschließenden Horizontal- 40 und Vertikalabschnitten 41 mäanderförmig geführt wird. In der dargestellten Ausführungsform werden die Horizontalabschnitte 40, welche die Verbindungsabschnitte im Sinne der vorliegenden Erfindung bilden, von einer oberen und einer unteren Verschlußplatte 43, 44 abgedeckt.

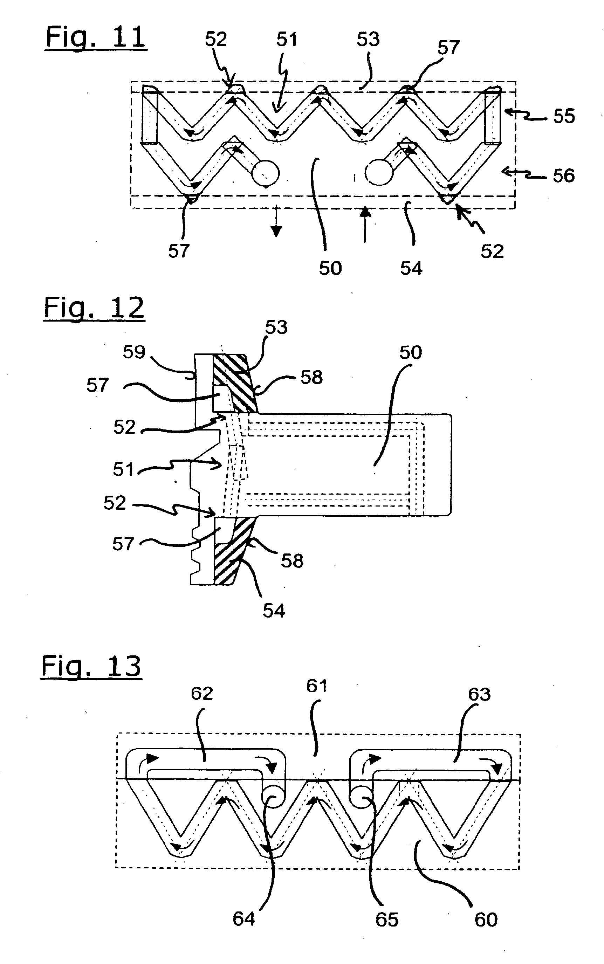

Figur 11 zeigt eine seitliche Schnittansicht einer alternativen Ausführungsform einer Halsbacke, die der Ausführungsform gemäß den Figuren 5 und 6 in der Ausgestaltung der einzelnen Abschnitte des Kühlkanals ähnlich ist. Auch in dieser Ausführungsform weist der Kühlkanal durch eine entsprechende Anordnung von Sackbohrungen Abschnitte auf, deren Wände von dem Grundkörper 50 gebildet werden sowie Verbindungsabschnitte 52, deren Wände sowohl von dem Grundkörper 50 als auch von Verschlußelementen 53, 54. Dabei weist entgegen der Figur 5 die in Figur 11 dargestellte Ausführungsform zwei Verschlußelemente 53, 54 auf, um die Verbindungselemente 52 zweier in Richtung der Halsbackenachse beabstandeter Abschnitte 55, 56 des Kühlkanals zu begrenzen. Dabei haben in der dargestellten Ausführungsform die Verschlußelemente 53, 54 Ausnehmungen 57, welche im Bereich der Verbindungsabschnitte angeordnet sind und in diesem Bereich den freien Durchmesser des Kühlkanals vergrößern.

In der in Figur 12 dargestellten seitlichen Schnittansicht durch die Halsbacke aus Figur 11 ist zu erkennen, daß die Verschlußelemente 53 und 54 nicht wie in den zuvor dargestellten Ausführungsformen von Verschlussplatten gebildet werden, sondern von Konusteilen 53, 54, welche auf den Grundkörper 50 der Halsbacke aufgesetzt sind. Diese Konusteile sind im Stand der Technik einstückig mit dem Grundkörper 50 der Halsbacke ausgeführt und dienen dazu, über die konischen Flächen 58, die von der Schließeinheit auf die Spritzgießform in Halsbackenrichtung ausgeübte Kraft in eine radiale Kraftkomponente zu überführen, welche geeignet ist, die beiden Halsbacken einer Spritzgießform für einen Vorformling währen des Spritzgießvorgangs zusammenzudrücken. Durch diese erfindungsgemäße Ausgestaltung der Konusteile ist es möglich, wie in Figur 12 zu erkennen, den Kühlkanal mit seinen Abschnitten 51, 52 sehr nah an der formgebenden Fläche 59 der Halsbacke anzuordnen. Der Kühlkanal ist dabei in der in Figur 12 dargestellten Ausführungsform in einen Bereich zwischen der formgebenden Oberfläche 59 und der konischen Oberfläche 58 angeordnet.

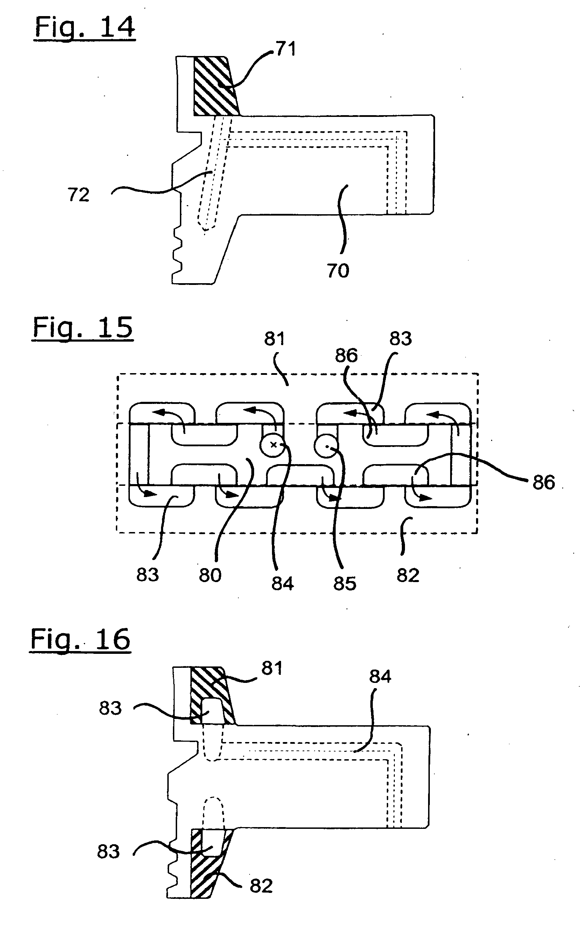

Auch die in den Figuren 13 und 14 dargestellten Ausführungsformen weisen von den Grundkörpern 60, 70 der Halsbacken separate Konusteile 1, 1 auf. Dabei ist das Konusteil 1 in Figur 13 mit zusätzlichen Kanälen 62, 63 ausgestattet, welche als Einlaß- bzw. Auslaßkanäle dienen und den Einlaß 65 mit dem Kühlkanal bzw. den Kühlkanal mit dem Auslaß 64 verbinden. Dem gegenüber ist das Konusteil 71 aus Figur 14 ohne Ausnehmungen oder Kanäle ausgestaltet und dient lediglich als Wand für die Verbindungsbereiche des Kühlkanals 72.

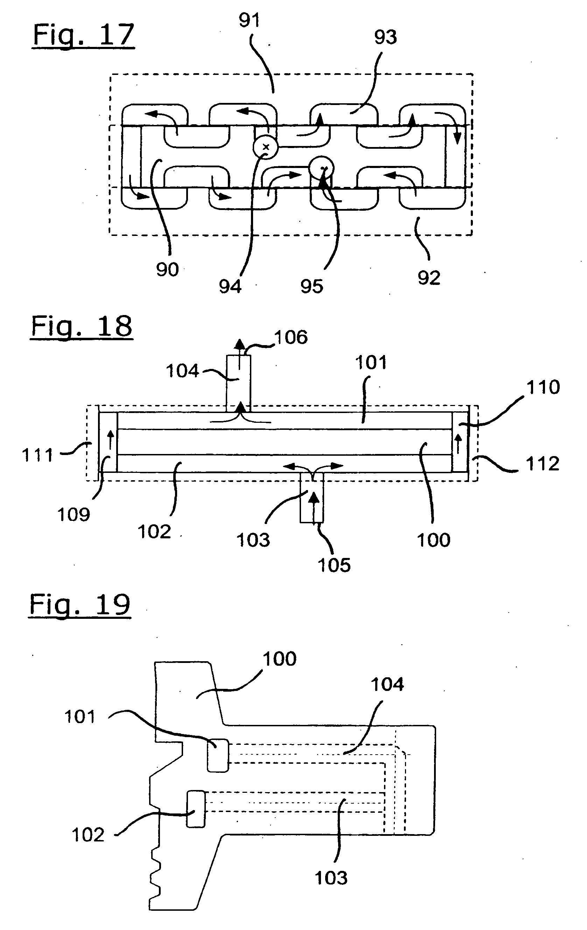

Die Figuren 15 und 17 zeigen schematische Schnittansichten von Ausführungsformen der erfindungsgemäßen Halsbacke mit je zwei Verschlußelementen 81, 82 bzw. 91, 92, die als separate Konusteile ausgestaltet sind. Dabei weisen die separaten Konusteile 81, 82 bzw. 91, 92 Ausnehmungen 83 bzw. 93 auf, die zum Führen des Fluids zwischen den in dem Grundkörper 80, 90 der Halsbacke vorgesehen Kanalabschnitten dienen. Figur 16 zeigt eine seitliche Schnittansicht durch eine Halsbacke gemäß Figur 15.

Die in den Figuren 15 und 17 dargestellten alternativen Ausführungsformen der erfindungsgemäßen Halsbackenkühlung unterscheiden sich voneinander durch die unterschiedliche Anordnung der Einlaß- 84, 94 und Auslaßkanäle 85, 95. In Figur 15 sind sowohl der Einlaßals auch der Auslaßkanal mit einem oberen Abschnitt des Kühlkanals verbunden, so daß die einzelnen Abschnitte des Kühlkanals seriell nacheinander vom gleichen Flüssigkeitsstrom durchflossen werden. Dem gegenüber sind der Einlaßkanal 94 und der Auslaßkanal 95 bei der in Figur 17 dargestellten nicht erfindungsgemäßen Ausführungsform derart angeordnet, daß sie mit dem oberen bzw. dem unteren Abschnitt des Kühlkanals verbunden sind, so daß sich eine parallele Durchströmung eines linken und eines rechten Bereichs des Kühlkanals ergibt. Auf diese Weise verzweigt sich der Fluidstrom durch den Kühlkanal und es entsteht eine "parallele" Anordnung der einzelnen Abschnitte des Kühlkanals.

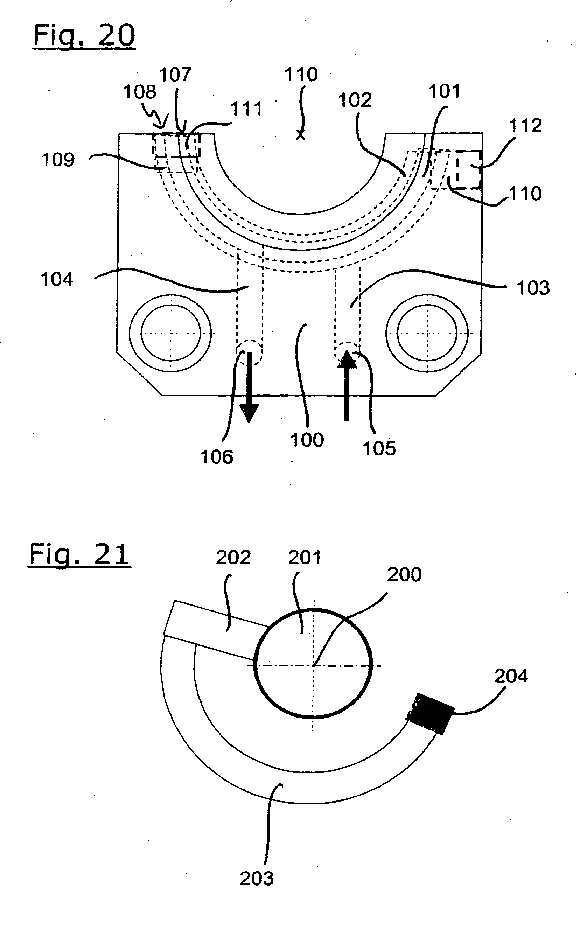

In den Figuren 18 bis 20 ist eine weitere alternative Ausführungsform dargestellt, welche gekrümmt horizontale Abschnitte 101, 102 des Kühlkanals aufweist. Wie insbesondere aus der Darstellung in Figur 19 hervorgeht, werden die Wände der horizontalen Abschnitte 101, 102 des Kühlkanals ausschließlich vom Grundkörper 100 der Halsbacke gebildet. Die Krümmung der horizontalen Abschnitte 101, 102 ist in der Ansicht von unten auf die Halsbacke in Figur 20 deutlich zu erkennen. Diese gekrümmten Abschnitte werden mit Hilfe von Funkenerosion von der Stirnseite 107 her aus dem Grundkörper 100 ausgenommen. Dadurch entsteht ein offenes Ende 108 der horizontalen Abschnitte 101, 102 des Kühlkanals. An diesem offenen Ende 108 ist eine Ausnehmung 109 vorgesehen, welche einen vertikalen Abschnitt des Kühlkanals bildet und eine Fluidverbindung zwischen dem oberen horizontalen Abschnitt 101 und dem unteren horizontalen Abschnitt 102 herstellt. Ein eben solcher vertikaler Abschnitt 110 ist an dem geschlossenen Ende der horizontalen Abschnitte 101, 102 vorgesehen, so daß auch hier eine Fluidverbindung zwischen dem oberen 101 und dem unteren Abschnitt 102 vorgesehen ist. Die vertikalen Abschnitte 109, 110 sind mit Verschlußelementen 111, 112 verschlossen, so daß ein vollständig geschlossener Kühlkanal gebildet ist. Der Einlaßkanal 103 bzw. der Auslaßkanal 104 verbinden den Einlaß 105 mit dem unteren horizontalen Abschnitt 102 des Kühlkanals sowie den oberen horizontalen Abschnitt 101 des Kühlkanals mit dem Auslaß 106, so daß auch in dieser Ausführungsform eine "Parallelkonfiguration" des Kühlkanals vorliegt.

Figur 21 zeigt das Werkzeug für die Funkenerosion, welches es ermöglicht, die gekrümmten horizontalen Kanäle 101, 102 aus dem Grundkörper 100 der Halsbacke auszunehmen. Das Werkzeug ist um eine Achse 200 drehbar gelagert, wobei auf der Welle 201 ein Ausleger 202 befestigt ist, welcher eine Länge hat, die im wesentlichen dem Abstand des Kühlkanals, z. B. 101, von der Halsbackenachse 110 entspricht. An dem Ausleger ist ein gekrümmter Werkzeughalter 203 befestigt, dessen Krümmung der Krümmung des Kühlkanals entspricht, so daß der Werkzeughalter 203 beim Ausnehmen des Kühlkanals in diesen eingeführt werden kann. Am vorderen Ende des Werkzeughalters 203 ist eine Funkenerosionsspitze 204 angebracht, welche die eigentliche Funkenerosion bewirkt und damit die Materialabtragung zur Ausnehmung des Kühlkanals 101 aus dem Grundkörper 100 der Halsbacke ermöglicht.

Für Zwecke der ursprünglichen Offenbarung wird darauf hingewiesen, daß sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende explizite Darstellung sämtlicher denkbarer Merkmalskombinationen wird hier nur der Kürze und der Lesbarkeit der Beschreibung wegen verzichtet.

### Bezugszeichenliste

- 1: Werkzeugkörper
- 2: Trennfläche
- 3: Hohlraum
- 4: Kühlbohrung
- 5: Kühlbohrung
- 6: konusförmiger Anschluß
- 7: zusätzliche Bohrung
- 8: zusätzliche Bohrung
- 10: Grundkörper
- 11: Sackbohrung
- 12: Verbindungsstellen
- 13: Verbindungsabschnitt des Kühlkanals
- 14: Verbindungsabschnitt des Kühlkanals
- 15: Einlaßkanal
- 16: Auslaßkanal
- 17: Einlaß
- 18: Auslaß
- 19: Verschlußplatte
- A: formgebende Oberfläche
- B: Halsring
- C: Gewinde
- 20: Grundkörper
- 21: Vertikalabschnitt
- 22: Horizontalabschnitt
- 23: Horizontalabschnitt
- 24: Verschlußplatte
- 25: Verschlußplatte
- 26: Einlaßkanal
- 27: Auslaßkanal
- 28: Einlaß
- 29: Auslaß
- 30: formgebende Oberfläche
- 32: Ausnehmung
- 40: Horizontalabschnitte
- 41: Vertikalabschnitte
- 42: Einlaßkanal
- 43: Verschlußplatte
- 44: Verschlußplatte
- 50: Grundkörper
- 51: Abschnitt des Kühlkanals
- 52: Abschnitt des Kühlkanals
- 53: Verschlußplatte
- 54: Verschlußplatte
- 55: Abschnitt des Kühlkanals
- 56: Abschnitt des Kühlkanals
- 57: Ausnehmungen
- 58: konische Fläche
- 59: formgebende Fläche der Halsbacke
- 60: Grundkörper
- 61: Konusteil
- 62: zusätzlicher Kanal
- 63: zusätzlicher Kanal
- 64: Auslaß
- 65: Einlaß
- 70: Grundkörper
- 71: Konusteil
- 72: Kühlkanal
- 80: Grundkörper
- 81: Verschlußelement
- 82: Verschlußelement
- 84: Einlaßkanal
- 85: Auslaßkanal
- 90: Grundkörper
- 94: Einlaßkanal
- 95: Auslaßkanal
- 100: Grundkörper
- 101: horizontaler Kanal
- 102: horizontaler Kanal
- 105: Einlaß
- 107: Stirnseite
- 109: vertikaler Abschnitt
- 110: vertikaler Abschnitt
- 111: Verschlußelement
- 112: Verschlußelement
- 200: Achse
- 202: Ausleger
- 203: Werkzeughalter
- 204: Funkenerosionsspitze

## Patentansprüche

1. Halsbacke eines Formwerkzeuges zur Herstellung eines Hohlkörperformlings mittels Spritzgießen, wobei die Halsbacke einen Grundkörper (10) mit einer formgebenden Oberfläche, die der Außenkontur eines Halsabschnittes des herzustellenden Hohlkörperformlings angepaßt ist und dafür vorgesehen ist, beim Spritzgießvorgang mit dem Halsabschnitt des Hohlkörperformlings in Kontakt zu treten, aufweist, wobei weiterhin zumindest ein Kühlkanal für ein Kühlfluid, der zumindest abschnittsweise im wesentlichen parallel zur formgebenden Oberfläche verläuft, ein Einlaß (17) und ein Auslaß (18) sowie ein Einlaßkanal (15) und ein Auslaßkanal (16), die den Einlaß (17) bzw. den Auslaß (18) mit dem Kühlkanal verbinden, vorgesehen sind, wobei der Kühlkanal näher an der formgebenden Oberfläche angeordnet ist als der Einlaß (17) und der Auslaß (18), wobei der Kühlkanal zumindest einen im wesentlichen parallel zur formgebenden Oberfläche verlaufenden Abschnitt hat, der innerhalb des Grundkörpers (10) verläuft, so daß dessen Wände von dem Grundkörper (10) gebildet werden, **dadurch gekennzeichnet, daß** der Kühlkanal einen sich an diesen Abschnitt anschließenden Verbindungsabschnitt (13, 14), dessen Wände teilweise durch den Grundkörper und teilweise durch ein auf den Grundkörper aufgesetztes Verschlußelement (19) gebildet werden, aufweist, wobei Grundkörper (10) und Verschlußelement (19) derart ausgebildet sind, dass das Verschlußelement (19) als Wand sowohl für den Verbindungsabschnitt (13, 14) als auch für die Einlass- und Auslasskanäle (15, 16) dient.

2. Halsbacke nach Anspruch 1, **dadurch gekennzeichnet, daß** die formgebende Oberfläche zumindest einen Abschnitt einer Negativform eines Gewindes bildet.

3. Halsbacke nach Anspruch 1 oder 2, **dadurch gekennzeichnet, daß** die formgebende Oberfläche aus Abschnitten besteht, die im wesentlichen die Form eines Teilzylindermantels oder die Form eines Teilkegelstumpfmantels haben, wobei vorzugsweise die Achsen der teilzylinderförmigen Abschnitte und die Achsen der teilkegelstumpfförmigen Abschnitte auf einer Achse, der sogenannten Halsbackenachse liegen.

4. Halsbacke nach einem der Ansprüche 1 bis 3, **dadurch gekennzeichnet, daß** zumindest abschnittsweise der Kühlkanal eine Verzweigung aufweist, so daß für das Kühlfluid beim Durchströmen der Halsbacke vom Einlaß zum Auslaß zumindest zwei unterschiedliche Strömungspfade gebildet werden.

5. Halsbacke nach einem der Ansprüche 1 bis 4, **dadurch gekennzeichnet, daß** der Kühlkanal mehrere sich aneinander anschließende im wesentlichen gerade Abschnitte aufweist, wobei zwischen zwei Abschnitten Verbindungsstellen gebildet sind und wobei die Kanalachsen von je zwei sich aneinander anschließenden Abschnitten nicht kollinear zueinander angeordnet sind.

6. Halsbacke nach Anspruch 5, **dadurch gekennzeichnet, daß** die Kanalachsen von je zwei sich aneinander anschließenden Abschnitten einen Winkel zwischen 15° und 155°, vorzugsweise zwischen 30° und 100° und besonders bevorzugt zwischen 40° und 70° einschließen.

7. Halsbacke nach Anspruch 5 oder 6, **dadurch gekennzeichnet, daß** die Abschnitte gegenüber der Halsbackenachse geneigt angeordnet sind.

8. Halsbacke nach einem der Ansprüche 5 bis 7, **dadurch gekennzeichnet, daß** zumindest jede zweite Verbindungsstelle zwischen sich aneinander anschließenden Abschnitte einen Verbindungsabschnitt des Kühlkanals bilden, dessen Kanalwand zumindest teilweise von dem Verschlußelement gebildet wird.

9. Halsbacke nach einem der Ansprüche 1 bis 8, **dadurch gekennzeichnet, daß** der Kühlkanal eine Mehrzahl von sich aneinander anschließenden Abschnitten aufweist, wobei jeder zweite der Mehrzahl von sich aneinander anschließenden Abschnitten ein Horizontalabschnitt ist, der im wesentlichen senkrecht zu der Halsbackenachse angeordnet ist, und immer ein Horizontalabschnitt über einen Vertikalabschnitt, der mit einem Winkel von weniger als 60°, vorzugsweise zwischen 30° und 45° und besonders bevorzugt zwischen 35° und 40° gegenüber der Halsbackenachse geneigt ist, mit einem weiteren Horizontalabschnitt verbunden ist.

10. Halsbacke nach Anspruch 9, **dadurch gekennzeichnet, daß** die Kanalwände zumindest jedes vierten Abschnitts, vorzugsweise jedes zweiten Abschnitts der Mehrzahl von sich aneinander anschließenden Abschnitten teilweise von dem Verschlußelement gebildet werden.

11. Halsbacke nach Abschnitt 9 oder 10, **dadurch gekennzeichnet, daß** der Kühlkanal zumindest abschnittsweise alternierend Horizontalabschnitte und Vertikalabschnitte aufweist, die derart angeordnet sind, daß das Fluid vom im Kühlkanal zumindest abschnittsweise mäanderförmig geführt ist.

12. Halsbacke nach einem der Ansprüche 9 bis 11, **dadurch gekennzeichnet, daß** der Kühlkanal genau zwei Horizontalabschnitte und mindestens zwei die Horizontalabschnitte verbindende Vertikalabschnitte aufweist, die derart angeordnet sind, daß das durch den Einlaß in die Halsbacke eintretende Fluid durch den Einlaßkanal zu dem ersten der Horizontalabschnitte, von diesem über die zumindest zwei Vertikalabschnitte zu dem zweiten Horizontalabschnitt und weiter zum Auslaßkanal und zum Auslaß geleitet wird.

## Claims

1. A neck block of a molding tool for the production of a hollow body preform by means of injection molding, wherein the neck block has a main body (10) with a shaping surface which is adapted to the external contour of a neck portion of the hollow body preform to be produced and is provided to come into contact in the injection molding operation with the neck portion of the body preform, wherein furthermore there are provided at least one cooling passage for a cooling fluid which at least portion-wise extends substantially parallel to the shaping surface, an inlet (17) and an outlet (18) and an inlet passage (15) and an outlet passage (16) which connect the inlet (17) and the outlet (18) respectively to the cooling passage, wherein the cooling passage, wherein the cooling passage is arranged closer to the shaping surface than the inlet (17) and the outlet (18), wherein the cooling passage has at least one portion which extends substantially parallel to the shaping surface and which extends within the main body (10) so that the walls of which are formed by the main body (10), **characterized in that** the cooling passage comprises a connecting portion (13, 14) which adjoins said portion and the walls of which are formed in part by the main body and in part by a closure element (19) fitted onto the main body, wherein the main body (10) and the closure element (19) are formed in such a way that the closure element (19) serves as a wall for the connecting portion (13, 14) as well as for the inlet and outlet passages (15, 16).

2. A neck block according to claim 1, **characterized in that** the shaping surface forms at least a portion of a negative shape of a screwthread.

3. A neck block according to claim 1 or 2, **characterized in that** the shaping surface comprises portions which are substantially in the form of a partial cylinder or the shape of a partial truncated cone, wherein preferably the axes of the part-cylindrical portions and the axes of the part-frustoconical portions are disposed on an axis, referred to as the neck block axis.

4. A neck block according to one of claims 1 to 3, **characterized in that** at least in part the cooling passage is branched so that at least two different flow paths are formed for the cooling fluid when flowing through the neck block from the inlet to the outlet.

5. A neck block according to one of claims 1 to 4, **characterized in that** the cooling passage has a plurality of mutually adjoining substantially straight portions, wherein connecting locations are formed between two portions and wherein the passage axes of each two respective mutually adjoining portions are not arranged in mutually co-linear relationship.

6. A neck block according to claim 5, **characterized in that** the passage axes of each two respective mutually adjoining portions include an angle between 15° and 155°, preferably between 30° and 100° and particularly preferably between 40° and 70°.

7. A neck block according to claim 5 or 6, **characterized in that** the portions arranged inclinedly with respect to the neck block axis.

8. A neck block according to one of claims 5 to 7, **characterized in that** at least each second connecting location between mutually adjoining portions forms a connecting portion of the cooling passage, the passage wall of which is at least partly formed by the closure element.

9. A neck block according to one of claims 1 to 8, **characterized in that** the cooling passage has a multiplicity of mutually adjoining portions, wherein each second one of the multiplicity of mutually adjoining portions is a horizontal portion arranged substantially perpendicularly to the neck block axis and a horizontal portion is always connected to a further horizontal portion by way of a vertical portion which is inclined at an angle of less than 60°, preferably between 35° and 40° with respect to the neck block axis.

10. A neck block according to claim 9, **characterized in that** the passage walls of at least each fourth and preferably each second portion of the multiplicity of mutually adjoining potions is formed in part by the closure element.

11. A neck block according to claim 9 or 10, **characterized in that** the cooling passage has at least portion-wise alternatively horizontal portions and vertical portions which are so arranged that the fluid is guided in a meander form at least portion-wise by the cooling passage.

12. A neck block according to one of claims 9 to 11, **characterized in that** the cooling passage has precisely two horizontal portions and at least two vertical portions which connect the horizontal portions and which are so arranged that the fluid entering the neck block through the inlet is passed through the inlet passage to the first of the horizontal portions, from same by way of the at least two vertical portions to the second horizontal portion and further to the outlet passage and to the outlet.

## Revendications

1. Mâchoire de col appartenant à un outil de moulage destiné à produire une ébauche de corps creux par moulage par injection, qui présente un corps de base (10) muni d'une surface moulante qui est adaptée au contour extérieur d'une partie col de l'ébauche de corps creux à fabriquer et qui est prévue pour entrer en contact avec la partie col de l'ébauche de corps creux pendant le processus de moulage par injection, dans laquelle il est prévu, en outre, au moins un canal de refroidissement pour un fluide de refroidissement, qui s'étend, au moins par endroits, sensiblement parallèlement à la surface moulante, une entrée (17) et une sortie (18), ainsi qu'un canal d'entrée (15) et un canal de sortie (16) qui relient respectivement l'entrée (17) et la sortie (18) au canal de refroidissement, le canal de refroidissement étant placé plus près de la surface moulante que l'entrée (17) et la sortie (18), le canal de refroidissement comprenant au moins un segment s'étendant sensiblement parallèlement à la surface moulante, qui s'étend à l'intérieur du corps de base (10), de sorte que ses parois sont formées par le corps de base (10), **caractérisée en ce que** le canal de refroidissement comprend un segment de jonction (13, 14) qui se raccorde à ce segment et dont les parois sont formées en partie par le corps de base et en partie par un élément de fermeture (19) posé sur le corps de base, le corps de base (10) et l'élément de fermeture (19) étant configurés de telle sorte que l'élément de fermeture (19) sert de paroi aussi bien pour le segment de jonction (13, 14) que pour les canaux d'entrée et de sortie (15, 16).

2. Mâchoire de col selon la revendication 1, **caractérisée en ce que** la surface moulante forme au moins une partie d'une forme en creux d'un filetage.

3. Mâchoire de col selon la revendication 1 ou 2, **caractérisée en ce que** la surface moulante est formée de segments qui ont sensiblement la forme d'une partie de paroi latérale de cylindre ou la forme d'une partie de paroi latérale d'un tronc de cône, les axes des segments en forme de partie de cylindre et les axes des segments en forme de partie de tronc de cône se trouvant sur un axe appelé axe de la mâchoire de col.

4. Mâchoire de col selon l'une des revendications 1 à 3, **caractérisée en ce que** le canal de refroidissement présente, au moins par endroits, une ramification, de sorte qu'il se forme pour le fluide de refroidissement, dans sa traversée de la mâchoire de col, au moins deux voies d'écoulement différentes entre l'entrée et la sortie

5. Mâchoire de col selon l'une des revendications 1 à 4, **caractérisée en ce que** le canal de refroidissement présente plusieurs segments sensiblement droits qui se raccordent entre eux, des zones de jonction étant formées entre deux segments et les axes de canal de deux segments qui se raccordent entre eux étant disposés sur des plans mutuellement non colinéaires.

6. Mâchoire de col selon la revendication 5, **caractérisée en ce que** les axes de canal de segments qui se raccordent entre eux enferment un angle valant entre 15° et 155°, de préférence entre 30° et 100° et, de façon particulièrement préférée, entre 40° et 70°.

7. Mâchoire de col selon la revendication 5 ou 6, **caractérisée en ce que** les segments sont inclinés par rapport à l'axe de la mâchoire de col.

8. Mâchoire de col selon l'une des revendications 5 à 7, **caractérisée en ce qu'**au moins une zone sur deux, parmi les zones de jonction entre segments qui se raccordent entre eux, forme un segment de jonction du canal de refroidissement, dont la paroi de canal est formée au moins en partie par l'élément de fermeture.

9. Mâchoire de col selon l'une des revendications 1 à 8, **caractérisée en ce que** le canal de refroidissement présente une pluralité de segments qui se raccordent entre eux, un segment sur deux, parmi la pluralité des segments qui se raccordent entre eux, étant un segment horizontal qui est disposé sensiblement perpendiculairement à l'axe de la mâchoire de col, et un segment horizontal étant toujours relié à un autre segment horizontal par un segment vertical qui est incliné sur l'axe de la mâchoire de col d'un angle de moins de 60°, de préférence compris entre 30° et 45° et de façon plus particulièrement préférée, compris entre 35° et 40°.

10. Mâchoire de col selon la revendication 9, **caractérisée en ce que** la paroi de canal d'au moins un segment sur quatre, de préférence d'un segment sur deux, sur la pluralité des segments qui se raccordent entre eux, est formée en partie par l'élément de fermeture.

11. Mâchoire de col selon la revendication 9 ou 10, **caractérisée en ce que** le canal de refroidissement présente, au moins par endroits, des segments horizontaux et des segments verticaux en alternance, qui sont disposés de telle sorte que le fluide de refroidissement circule en méandres, au moins par endroits, dans le canal de refroidissement.

12. Mâchoire de col selon l'une des revendications 9 à 11, **caractérisée en ce que** le canal de refroidissement présente exactement deux segments horizontaux et au moins deux segments verticaux reliant les segments horizontaux, qui sont disposés de telle sorte que le fluide qui entre dans la mâchoire de col par l'entrée est envoyé via le canal d'entrée au premier des segments horizontaux, de celui-ci au deuxième segment horizontal via lesdits segments verticaux au moins au nombre de deux, puis au canal de sortie et à la sortie.
